# EUROPEAN PATENT APPLICATION

(11) **EP 3 748 398 A1**
(43) Date of publication of application: **09.12.2020**
(21) Application number: 18907735.7
(22) Date of filing: 28.02.2018
(51) Int. Cl.: G01S 13/74, B65G 61/00, G01S 5/14

(54) **STOCK-PAPER-ROLL MANAGEMENT SYSTEM AND STOCK-PAPER-ROLL MANAGEMENT METHOD**

(71) Applicant: Mitsubishi Heavy Industries Machinery Systems, Ltd., Kobe-shi, Hyogo 652-8585 (JP)
(72) Inventor: NITTA, Takashi, Kobe-shi, Hyogo 652-8585 (JP)
(74) Representative: Hoffmann Eitle
(86) International application number: PCT/JP2018/007658
(87) International publication number: WO 2019/167206

(57) **Abstract**

A system for managing a paper roll includes an IC tag (2) for long distance that is a non-contact passive type mounted on each of a plurality of paper rolls (1); a transmitter (3) that transmits a radio wave toward the plurality of paper rolls; a receiver (4) that receives a response radio wave from each of the paper rolls for the transmitted radio wave; a control device (5) including a tag position calculation unit that calculates a three-dimensional position of the IC tag which has emitted the response radio wave, based on information regarding the received response radio wave; and a storage unit (6) that stores three-dimensional position information of each of the plurality of paper rolls from information regarding the calculated three-dimensional position and paper information, which is specific to each of the paper rolls, as linked information. Accordingly, it is possible to easily and properly select a paper roll suitable for a production order from a large number of the paper rolls stored in a paper storage area without requiring a special technique.

## Description

### Technical Field

The present invention relates to a system for managing a paper roll and a method for managing a paper roll that are suitable for use in management of a paper roll which is a rolled corrugated paper for producing corrugated products.

### Background Art

The management of a paper is important to when paper products are produced.

For example, when corrugated products such as corrugated boards and corrugated boxes are produced, various types and a large number of rolled corrugated papers (paper rolls) are stored in a paper storage area such as a paper warehouse, and for production, a paper roll suitable for a production order is selected from a group of the paper rolls stored in the paper storage area and is taken out to be carried into a production line side such as a corrugator, for example, by a transport device such as a clamp lift.

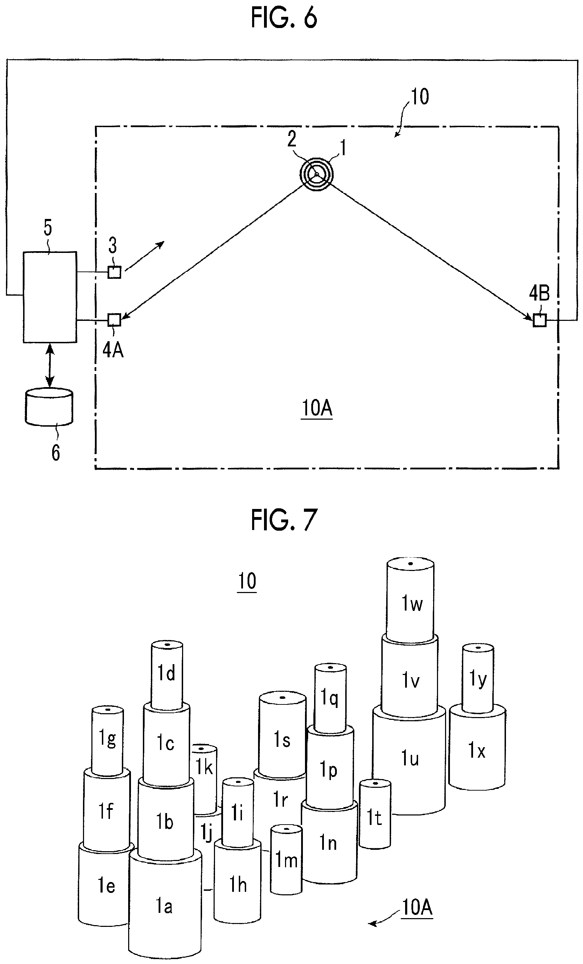

As illustrated in Fig. 7, in a paper storage area 10, various types and a very large number (for the sake of convenience, a limited number is illustrated in Fig. 7) of paper rolls 1a to 1y (when the paper rolls are not distinguished from each other, the paper rolls are denoted by reference number 1) are stored. The paper rolls 1 are new ones, but are in use in many cases. In order to select the paper roll 1 suitable for a production order from the paper rolls 1a to 1y, it should be possible to find out paper information specific to each of the paper rolls 1. For this reason, for example, a paper where the paper information of the paper roll 1 is printed or hand-written is affixed to an outer surface of the paper roll 1, so that the paper information is displayed.

For example, based on the paper information written on the outer surface of the paper roll 1, an operator who handles the paper roll 1 uses the clamp lift to perform an operation of carrying the paper roll 1, which is a new one, into a paper warehouse to store the paper roll 1, an operation of releasing the paper roll 1 which is a new one suitable for a production order or the paper roll 1 in use from the paper warehouse to the corrugator based on the paper information, or an operation of returning a paper in use after use in the corrugator to the paper warehouse to store the paper.

As illustrated in Fig. 7, generally, the paper rolls 1 are stacked in approximately one to three or four stages and stored in the paper warehouse.

Therefore, in order for the operator handling the paper roll 1 to seek out the paper roll 1 which is a target, the operator is required to roughly remember at which positions and what types of the paper rolls 1 (basis weight, paper width, paper length (length of the paper of the paper roll 1), manufacturer, and brand) are present in the paper warehouse, to move to an area in memory, to roughly estimate the paper roll 1 which is a target, and finally to confirm character information on the outer surface to determine whether or not the estimated paper roll is the paper roll 1 which is a target.

For this reason, there is a problem that it takes time to specify the target paper which has to be selected, or a problem that the paper roll 1 may be falsely selected.

In addition, normally, a very large number of the paper rolls 1 are stored in the paper storage area such as the paper warehouse, and the storage status of the paper rolls 1 changes daily or moment by moment, and thus it is very difficult for the operator to update and memorize the storage status of the paper rolls 1 in real time. For this reason, it is difficult to select the paper roll 1 more suitable for a production order.

In addition, when the paper roll 1 is in use, it is difficult to find out the paper length; and thereby, it becomes more difficult to select the paper roll 1 having a paper length optimal for a production order.

Since the operation is difficult as such, the skill of the operator is required and it is difficult to simply change the operator.

In addition, when the paper roll 1 is stored, the paper roll 1 in the lowermost stage is placed directly on a floor surface in many cases. In this case, the water content on a floor surface side of the paper roll 1 tends to be high, and as a result, when the paper roll 1 is produced into a corrugated board, an asymmetric warpage tends to occur in a width direction, and the management of the paper roll 1 in this regard is also required.

By the way, PTL 1 discloses a technique where a long-distance IC tag which is a non-contact passive type is provided on an inner wall surface or in a wall of a winding core which is made of a fiber reinforced plastic and around which a sheet-like material such as a paper or a film is wound, an ID (core ID) of the long-distance IC tag is registered in a management database, and a long-range reading device for the long-distance IC tag capable of reading the entire storage location of the winding cores reads the core ID's of the long-distance IC tags, which are attached to the winding cores placed in the storage location, to transmit the read core ID information to a management server, so that the core ID's are managed by the management server (refer to claim 8 and a second embodiment).

In the management technique described in PTL 1, a plurality of the long-range reading devices are disposed in the storage location, the ID's of long-distance IC tags 22 of a plurality of winding cores placed in a reading range of each of the long-range reading devices are read, and the read ID information is transmitted to the management server. The management server identifies which of the plurality of long-range reading devices provided is a long-range reading device that has transmitted the core ID, by a position ID assigned to each of the long-range reading devices, and rewrites location information of the received core ID to the position ID.

However, in the technique of PTL 1, it is possible to find out in which reading range of the long-range reading device the winding core is placed; however, it is not possible to specifically find out the position of the individual winding core.

Namely, in the technique of PTL 1, it is possible to narrow down in which area of the paper warehouse the winding core that is a target is positioned; however, it is not possible to specifically find out where the winding core that is a target is present in the area. Therefore, the operator should seek out the winding core, which is a target, in the specified area as described above.

### Citation List

### Patent Literature

[PTL 1] Japanese Unexamined Patent Application Publication No. 2009-1348

### Summary of Invention

### Technical Problem

The invention has been made in light of the above-described problems, and an object of the invention is to provide a system for managing a paper roll and a method for managing a paper roll that can easily and properly select a paper roll suitable for a production order from a large number of paper rolls without requiring a special technique. Solution to Problem

In order to achieve the above object, according to an aspect of the invention, there is provided a system for managing a paper roll including: an IC tag for long distance that is a non-contact passive type mounted on each of a plurality of paper rolls; a transmitter that transmits a radio wave toward the IC tag of each of the plurality of paper rolls; a receiver that receives a response radio wave from the IC tag for the transmitted radio wave; a control device including a tag position calculation unit that calculates a three-dimensional position of the IC tag which has emitted the response radio wave, based on information regarding the response radio wave received by the receiver; and a storage unit that stores three-dimensional position information and paper information of each of the plurality of paper rolls as linked information from information regarding the three-dimensional position of the IG tag calculated by the tag position calculation unit and the paper information that is input in advance and is specific to the paper roll on which the IC tag is mounted.

It is preferable that the information regarding the response radio wave includes directivity information and intensity information of the response radio wave.

Alternatively, it is preferable that a plurality of the receivers are provided at different positions, and information regarding the response radio wave received by each of the receivers includes directivity information of the response radio wave, and the tag position calculation unit calculates the three-dimensional position based on the information regarding the response radio wave received by each of the plurality of receivers.

It is preferable that the control device operates the transmitter, the receiver, and the tag position calculation unit at a predetermined cycle to update the linked information stored in the storage unit at the predetermined cycle.

It is preferable that the control device includes an input unit that inputs the paper information of the paper roll, which is a new one or is in use, to the storage unit.

It is preferable that the control device includes a carry-out guide unit that guides a position of the paper roll based on the linked information stored in the storage unit.

It is preferable that the IC tag is disposed at a location that is biased from a center of a winding core of the paper roll in an axial direction toward any one side.

It is preferable that the IC tags are disposed at two locations that are separated from each other in an axial direction of a winding core of the paper roll.

It is preferable that the paper information includes information regarding a basis weight, a paper width, a manufacturer, a brand, and a paper length of the paper roll.

It is preferable that the control device includes a vertical information adding unit that determines whether or not the paper roll is disposed in a lowermost stage in contact with or proximate to a floor surface, from paper width information obtained from the paper information of the paper roll and information regarding a position of the IC tag of the paper roll in an axial direction and determines which axial end face of both axial end faces of the paper roll is disposed downward when the paper roll is disposed in the lowermost stage, to add determined vertical direction-of-roll information to the paper information, and a carry-in guide unit that guides a position or a posture of the paper roll in a vertical direction during storage of the paper roll based on the vertical direction-of-roll information when the paper roll is carried in.

It is preferable that the carry-in guide unit acquires the vertical direction-of-roll information over time, and when the paper roll is disposed in the lowermost stage and one axial end face of the paper roll is disposed downward for a predetermined time or more, the carry-in guide unit guides that the axial direction of the paper roll is to be reversed.

It is preferable that when the paper roll is carried in, the carry-in guide unit selects and guides a carry-in position based on the linked information.

It is preferable that the control device includes a carry-in position priority-setting unit that sets priority for carry-in considerations in selecting a carry-in position.

It is preferable that the carry-in considerations include at least one of a basis weight, a brand, and a paper length of the paper roll and a progress state of the paper roll.

It is preferable that the control device includes a selection unit to which production order information for producing a product using the paper roll is input and which selects a paper roll optimal for a production order based on the production order information and the paper information of the linked information stored in the storage unit, and a position specifying unit that specifies a position of the paper roll based on the three-dimensional position information of the linked information of the selected paper roll.

It is preferable that the control device includes a three-dimensional disposition calculation unit that calculates three-dimensional disposition information of all of the plurality of paper rolls and shape information of each of the paper rolls based on the linked information stored in the storage unit, an image position information acquiring unit that acquires image position information which specifies a field of sight of an operator involved in transport of the paper roll, and an image information generation unit that generates image information corresponding to the field of sight of the operator based on the information calculated by the three-dimensional disposition calculation unit and the information acquired by the image position information acquiring unit, and the system further includes a display device that displays an image based on the image information generated by the image information generation unit and identifies and displays the paper roll which is selected by the selection unit and has to be carried out.

It is preferable that the production order information includes information regarding a to-be-ordered length, which is information regarding a paper length required for production, and the selection unit compares the to-be-ordered length to the paper length of each of the paper rolls to select the paper roll suitable for the production order.

It is preferable that the control device includes a selection priority-setting unit that sets priority for selection considerations in selection by the selection unit.

It is preferable that the selection considerations include at least one of using up the paper roll, securing a remaining length usable at the next time by leaving the paper roll unused, easily accessing to the paper roll, and preferentially using the paper roll which is old.

It is preferable that the control device includes a warning information transmitter which warns that an erroneous selection is made, when a paper roll different from the paper roll selected by the selection unit is selected and taken out.

It is preferable that when the paper roll is placed at a carry-in position different from the carry-in position of the paper roll selected by the carry-in guide unit, the warning information transmitter warns that an erroneous placement is performed.

According to another aspect of the invention, there is provided a method for managing a paper roll which manages a plurality of paper rolls on which IC tags for long distance that are non-contact passive type are mounted, the method including: a transmitting and receiving step of transmitting a radio wave toward the IC tag of each of the plurality of paper rolls and receiving a response radio wave from the IC tag for the transmitted radio wave; a calculation step of calculating three-dimensional position information of the IC tag which has emitted the response radio wave, based on information regarding the received response radio wave; and a storage step of storing three-dimensional position information and paper information of each of the plurality of paper rolls as linked information from the calculated three-dimensional position information and the paper information which is input in advance and is specific to the paper roll on which the IC tag is mounted.

### Advantageous Effects of Invention

According to the invention, since the three-dimensional position information of the paper roll and the paper information specific to the paper roll are stored as the linked information, it is possible to find out at which position each of the plurality of paper rolls is disposed on a plane and in a perpendicular direction, namely, when the paper rolls are stored in a stacked manner, in which stage each of the paper rolls is disposed in a vertical direction. Therefore, when the paper roll is used, it is possible to find out the three-dimensional position of a required paper roll, and it is possible to properly and promptly perform the selection and the carry-out or the carry-in of the required paper roll without requiring a special technique.

### Brief Description of Drawings

Fig. 1 is a description diagram illustrating a configuration of a system for managing a paper roll according to an embodiment together with a plan view of a storage area.
Fig. 2 is a perspective view illustrating a paper roll on which an IC tag according to the embodiment is mounted.
Fig. 3 is a side view illustrating a vehicle for transporting a paper roll according to the embodiment.
Fig. 4 is a block diagram illustrating a configuration of a control system of the system for managing a paper roll according to the embodiment.
Fig. 5 is a view illustrating a display example of a display device according to the embodiment.
Fig. 6 is a description diagram illustrating a schematic configuration of a system for managing a paper roll according to a modification example of the embodiment together with a plan view of a storage area.
Fig. 7 is a perspective view illustrating a general storage state of paper rolls.

### Description of Embodiments

Hereinafter, embodiments of the invention will be described with reference to the drawings.

Each of the following embodiments is only an exemplary example, and it is not intended to exclude the application of various modifications or techniques which are not specified in the following embodiments. Configurations of the following embodiments can be variously modified and implemented without departing from the spirit thereof, and can be selected or appropriately combined as necessary.

### [System configuration]

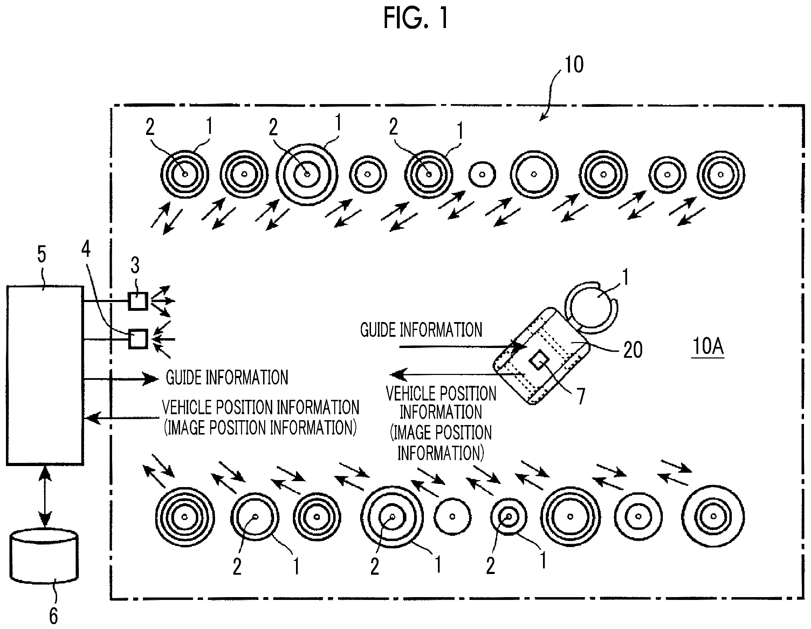

Firstly, a configuration of a system for managing a paper roll according to the present embodiment will be described with reference to Fig. 1.

As illustrated in Fig. 1, the system for managing a paper roll includes an IC tag 2 for long distance that is a non-contact passive type mounted on each of a large number of paper rolls 1, a transmitter 3 that transmits a radio wave toward the IC tag 2 of each of the paper rolls 1, and a receiver 4 that receives a response radio wave including directivity information and intensity information from each of the IC tags 2 for the transmitted radio wave. Here, with regard to the most general location where the paper rolls 1 are stored, a paper warehouse 10 is provided as an exemplary example of a storage area where a large number of the paper rolls 1 are stored; however, the location where the paper rolls 1 are stored is not necessarily limited to a storage area such as the paper warehouse 10.

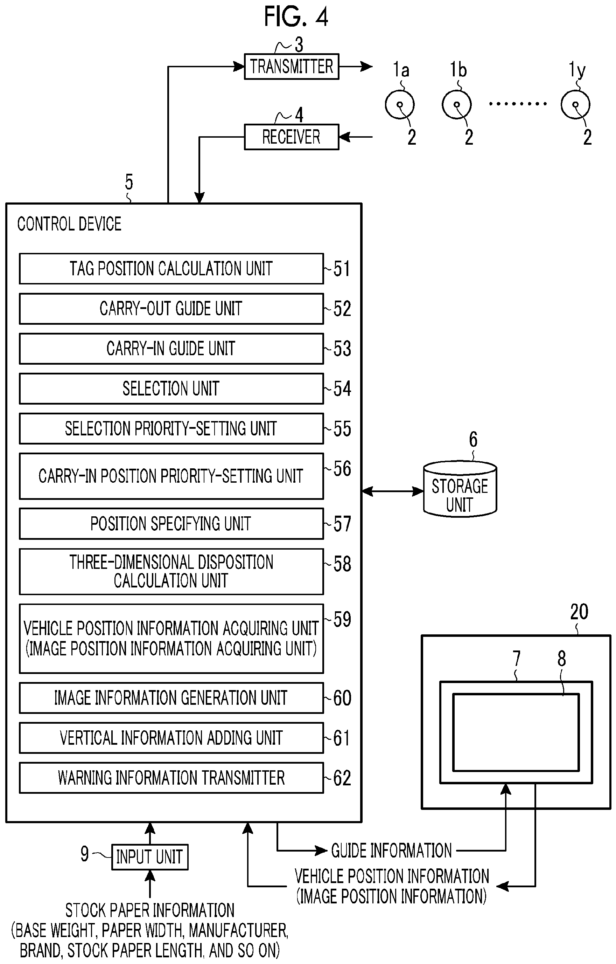

Furthermore, the system for managing a paper roll includes a control device 5 including a tag position calculation unit 51 that calculates the three-dimensional position of the IC tag 2 emitting a response radio wave, based on information regarding the direction and the intensity of the response radio wave received by the receiver 4, and a storage unit 6 that calculates three-dimensional position information of each of a plurality of the paper rolls 1 from information regarding the three-dimensional position of the IC tag 2 calculated by the tag position calculation unit 51 (refer to Fig. 4) to be described later and paper information which is input in advance and is specific to each of the paper rolls 1, to store the three-dimensional position information and the paper information of each of the paper rolls 1 and ID information of the IC tag 2 as linked information.

The paper information includes information regarding the basis weight, the paper width, the manufacturer, and the brand of a paper and the paper length.

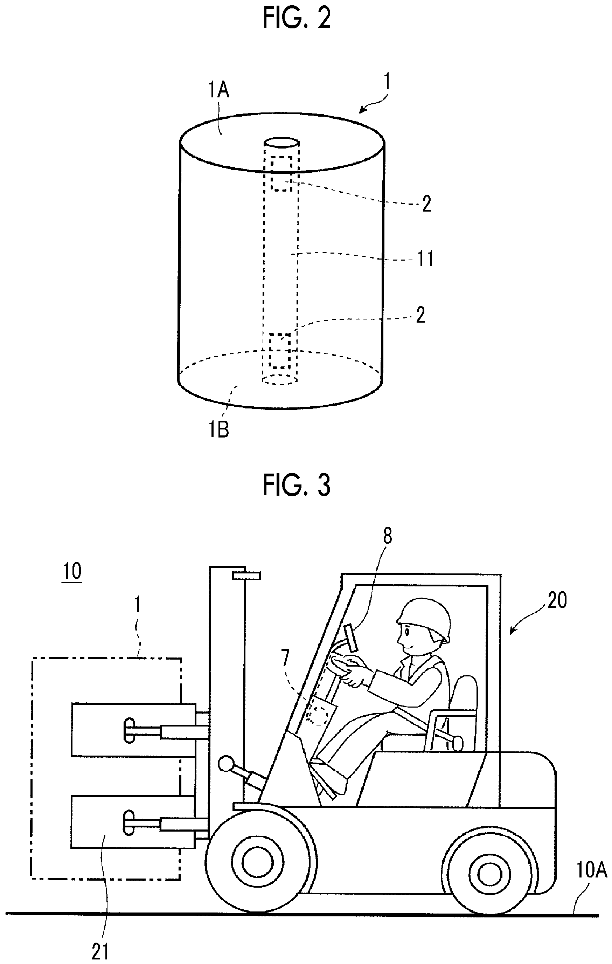

As illustrated in Fig. 2, the IC tag 2 for long distance that is a non-contact passive type is fixed to the inside of a winding core 11 of the paper roll 1. Here, the IC tag 2 responds to a transmitted radio wave from the transmitter 3 which is spaced apart therefrom by several tens of meters or more, to emit a response radio wave so as to reach the receiver 4, which is spaced apart therefrom by several tens of meters or more, with a predetermined accuracy.

The tag position calculation unit 51 obtains the three-dimensional position of the IC tag 2 based on information regarding the response radio wave received by the receiver 4. Specifically, the tag position calculation unit 51 of the present embodiment calculates the three-dimensional direction of the IC tag 2 with respect to the receiver 4 based on the direction of the response radio wave received by the receiver 4 and obtains the distance from the receiver 4 to the IC tag 2 based on the intensity of the response radio wave (attenuation state of oscillation propagation) to calculate the three-dimensional position of the IC tag 2 with respect to the receiver 4 from the three-dimensional direction and the distance.

In the present embodiment, a specific point in the paper warehouse 10 is set as an origin, but which is not specifically illustrated in Fig. 1, the three-dimensional position of the IC tag 2 is obtained with respect to the origin, and the three-dimensional position of the IC tag 2 with respect to the receiver 4 is corrected by the deviation between the position of the origin and the position of a representative point of the receiver 4; and thereby, the three-dimensional position of the IC tag 2 is obtained with respect to the origin.

Furthermore, with regard to the three-dimensional position of the paper roll 1 stored in the storage unit 6, the three-dimensional position of the IC tag 2 may be used as the position of a representative point of the paper roll 1 as it is. In addition, when the mounting position of the IC tag 2 with respect to the paper roll 1 and paper information (for example, paper width information and roll diameter information) of the paper roll 1 which is a target are acquired, and in a case where the paper roll 1 which is a target is not positioned in the lowermost stage and other paper rolls 1 are present therebelow, when paper information (for example, paper width information) of the paper rolls 1 therebelow and three-dimensional position information of the IC tags 2 are further acquired, the position of each portion of the paper roll 1 with respect to the position of the IC tag 2 can be calculated based on the acquired information and the three-dimensional positions of the IC tags 2. Accordingly, the shape and the three-dimensional position of the paper roll 1 itself can be obtained, and it is preferable that the obtained three-dimensional position is used as the three-dimensional position of the paper roll 1.

In addition, in the present embodiment, as illustrated in Fig. 2, the IC tags 2 are disposed and fixed at two locations on one end face 1A side and the other end face 1B side of the paper roll 1, the two locations being separated from each other in an axial direction. As described above, when response radio waves from two IC tags 2 in one paper roll 1 are received, it is possible to find whether the one end face 1A side of the paper roll 1 faces downward or the other end face 1B side faces downward, namely, the orientation of the paper roll 1 in the axial direction during storage.

When the paper width of the paper roll 1, namely, the axial length of the winding core 11 is known and the accuracy of the response radio wave from the IC tag 2 is ensured, the IC tag 2 is disposed at a location that is biased from the center of the winding core 11 in the axial direction (the center of the paper roll 1 in a paper direction) to any one side; and thereby, it is possible to find the orientation of the paper roll 1 in the axial direction during storage.

For example, when the paper rolls 1 are stored in a stacked manner, it is possible to find the position (position in a vertical direction) of a lower face of the paper roll 1 which is a target in a perpendicular direction from the paper widths of the paper rolls 1 therebelow, and when three-dimensional position of the IC tag 2 of the paper roll 1 which is a target is lower than the center of the paper width of the paper roll 1, it is possible to know that a side where the IC tag 2 is mounted faces downward.

The control device 5 operates the transmitter 3, the receiver 4, and the tag position calculation unit 51 at a predetermined cycle to update the linked information stored in the storage unit 6 at the predetermined cycle. When the paper roll 1 which is a new one or is in use is carried into the paper warehouse 10, for example, an operator operates a clamp lift (transport vehicle) 20 as illustrated in Fig. 3 to clamp and carry the paper roll 1 thereinto using a clamp 21. In addition, also when the paper roll 1 which is required is carried out from the paper warehouse 10 to be transported to a production line side such as a corrugator, the clamp lift 20 operated by the operator is used.

In addition, as illustrated in Figs, 1 and 4, the control device 5 is connected to an input unit 9 that inputs the paper information of the paper roll 1, which is a new one or is in use, to the storage unit 6, and linked information to be stored in the storage unit 6 can be newly input or updated through the input unit 9. When the paper roll 1 which is new is carried into the paper warehouse 10, linked information is newly input, and when the paper roll 1 in use is carried into the paper warehouse 10, based on a paper usage status obtained from the production line side such as the corrugator through the input unit 9, the paper length in the paper information of the linked information is updated and input.

In addition, in order to guide the carry-out of the paper roll 1 from the paper warehouse 10 and the carry-in of the paper roll 1 into the paper warehouse 10, as illustrated in Fig. 4, in addition to being provided with the tag position calculation unit 51, the control device 5 is provided with a carry-out guide unit 52, a carry-in guide unit 53, a selection unit 54, a selection priority-setting unit 55, a carry-in position priority-setting unit 56, a position specifying unit 57, a three-dimensional position calculation unit 58, a vehicle position information acquiring unit 59 as an image position information acquiring unit, an image information generation unit 60, a vertical information adding unit 61, and a warning information transmitter 62.

In the present embodiment, the units 51 to 62 are built in the control device 5; however, a part or all of the units 51 to 62 may be provided as hardware separately from the control device 5.

The carry-out guide unit 52 guides the position of the paper roll 1, which has to be carried out, in the paper warehouse 10 based on the linked information stored in the storage unit 6. In this case, the guidance of the position is performed using information from the selection unit 54, the selection priority-setting unit 55, the position specifying unit 57, the three-dimensional position calculation unit 58, the vehicle position information acquiring unit 59, and the image information generation unit 60.

The carry-in guide unit 53 guides the position of the paper roll 1, which has to be carried in, in the paper warehouse 10 based on the linked information stored in the storage unit 6. In this case, the guidance of the position is performed using information from the carry-in position priority-setting unit 56, the position specifying unit 57, the three-dimensional position calculation unit 58, the vehicle position information acquiring unit 59, the image information generation unit 60, and the vertical information adding unit 61.

In order to cause the carry-out guide unit 52 to guide the carry-out, when the operator inputs information regarding the next production order through the input unit 9, the selection unit 54 selects a paper roll optimal for the production order, based on production order information and the paper information of the linked information. The production order information includes to-be-ordered length information which is information regarding the paper length required for production. Namely, the selection unit 54 compares the to-be-ordered length information in the production order information to the paper information of the linked information stored in the storage unit to select the paper roll 1 suitable for the production order. Normally, there are a plurality of the paper rolls 1 suitable for the production order. Therefore, it is necessary to select one from the plurality of paper rolls 1 suitable for the production order based on any consideration.

The selection priority-setting unit 55 sets priority for selection considerations when one paper roll 1 is selected from the plurality of paper rolls selected by the selection unit 54.

Examples of the selection considerations can include using up the paper roll 1, securing the remaining length usable at the next time by leaving the paper roll 1 unused, easily accessing to the paper roll 1, and preferentially using the paper roll 1 which is old. In this case, it is possible to make a determination regarding using up the paper roll 1 and securing the remaining length usable at the next time by leaving the paper roll 1 unused, from the paper length included in the paper information. In addition, it is possible to make a determination regarding an easy access to the paper roll 1, from the three-dimensional position of the paper roll 1. In addition, it is possible to make a determination regarding preferentially using the paper roll 1 which is old by causing the paper information to include the purchase time of the paper roll 1. When the paper roll 1 is selected based on the selection priority set by the selection unit 54, the paper roll can be efficiently managed. The selection considerations may include at least one of the above considerations.

The carry-in position priority-setting unit 56 sets priority for carry-in considerations in selecting the carry-in position of the paper roll 1, which is used for guidance by the carry-in guide unit 53.

Namely, when the paper roll 1 is carried in and stored, it is effective for efficient management of the paper roll to carry the paper roll 1 in to store the paper 1 at a position or a divided area set based on any consideration. However, there are various considerations related to the carry-in position. Therefore, the carry-in position priority-setting unit 56 sets priority for the carry-in considerations.

The carry-in considerations include the basis weight, the brand, the paper length, whether or not the paper roll is a new one, and the progress state of the paper roll 1 such as whether or not the paper roll is a new one but the time has elapsed since the carry-in or whether or not the paper roll is in use, all of which are included in the paper information. In this case, with regard to the progress state of the paper roll 1, it is possible to determine whether or not the time has elapsed since the carry-in by causing the paper information to include the purchase time of the paper roll 1. In addition, it is possible to determine whether or not the paper roll is in use by causing the paper information to include the paper length at the purchase of the paper roll 1, separately from an updated paper length.

Accordingly, for example, the carry-in guide unit 53 differentially guides the carry-in position for each basis weight, differentially guides the carry-in position for each brand, differentially guides the carry-in position according to the paper length, or differentially guides the carry-in position according to the progress state of the paper roll 1. A carry-in position priority-setting unit 62 can set which carry-in consideration is prioritized over the carry-in considerations to customize guidance related to the carry-in.

The position specifying unit 57 specifies the position of the paper roll 1, which has to be carried out for production, in the paper warehouse 10 based on the three-dimensional position information in the linked information of the paper roll 1 selected by the selection unit 54. In addition, when the carry-in is guided by the carry-in guide unit 53, the position specifying unit 57 specifies the carry-in position according to the carry-in considerations.

The three-dimensional disposition calculation unit 58 calculates three-dimensional disposition information and shape information of each paper roll for all of the plurality of paper rolls 1 in the paper warehouse 10 based on the linked information stored in the storage unit 6.

The three-dimensional disposition calculation unit 58 will be further described. As described above, since the storage unit 6 stores the three-dimensional positions of all of the paper rolls 1 in three dimensions, namely, stores not only the three-dimensional positions of reference points of the paper rolls 1 but also information indicating how the paper rolls 1 are positioned in the paper warehouse 10 and what shapes the paper rolls 1 have, the three-dimensional disposition calculation unit 56 can calculate the three-dimensional disposition information and the three-dimensional shape information of each of the paper rolls 1 (the above information is collectively referred to as 3D computer graphic (CG) information) for all of the plurality of paper rolls 1 in the paper warehouse 10 based on the linked information.

The vehicle position information acquiring unit 59 acquires vehicle position information sent from the clamp lift 20, namely, acquires information regarding the position and the direction of the clamp lift 20, for example, using communication means. The position and the direction of the clamp lift 20 specify the field of sight of the operator getting in the clamp lift 20 to perform a transport operation such as the carry-out or the carry-in of the paper roll 1, and the vehicle position information is used as image position information by the image information generation unit 60.

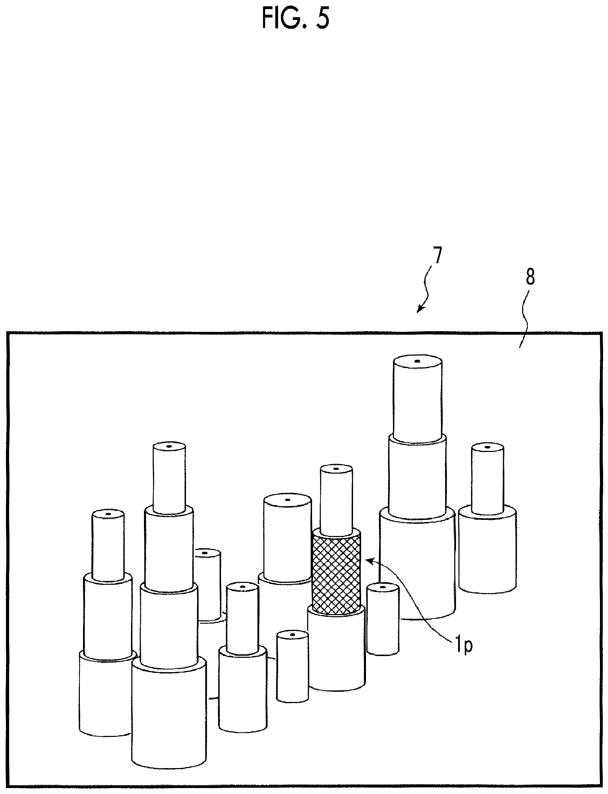

The image information generation unit 60 generates image information, which corresponds to the field of sight of the operator, from the information regarding the position and the direction of the clamp lift 20 detected by the vehicle position information acquiring unit 59 and the 3D CG information calculated by the three-dimensional disposition calculation unit 58. In addition, the paper roll 1 selected by the selection unit 54 can be found out in an image based on the linked information, and for example, as illustrated in Fig. 5, image information identifying and displaying the paper roll 1 which has to be carried out can be generated on a screen 8 of a display device 7. In the example illustrated in Fig. 5, a paper roll 1p of paper rolls 1a to 1y is a paper roll that has to be carried out.

In addition, when the carry-in position is specified by the position specifying unit 57, the image information generation unit 60 can generate image information specifying the carry-in position. The generated image information is sent to the display device 7 of the clamp lift 20 by the communication means, so that a guide image corresponding to the field of sight of the operator can be displayed on the screen 8 of the display device 7.

Here, a CG image is displayed on the screen 8 of the display device 7; however, the clamp lift 20 is equipped with a camera that captures an image in real time which corresponds to the field of sight of the operator, the captured image of the camera is displayed on the screen 8 of the display device 7, and the 3D CG is matched with the image of the camera, so that the paper roll 1 selected in the image of the camera can be also identified and displayed.

Various techniques such as color coding, highlight display, and the addition of a pointer to the paper roll 1 can be applied as an identification and display technique.

The vertical information adding unit 61 determines whether or not the paper roll 1 is disposed in the lowermost stage, which is in contact with or proximate to a floor surface 10A of the paper warehouse 10, from the paper width information obtained from the paper information of the paper roll 1 and the position of the IC tag 2 of the paper roll 1 in the axial direction, namely, information regarding the position of the paper roll 1 in the axial direction. When the paper roll is disposed in the lowermost stage, the vertical information adding unit 61 determines which axial end face of both axial end faces of the paper roll 1 is disposed downward, to add vertical direction-of-roll information to the paper information.

Namely, when the paper roll 1 is disposed in the lowermost stage, an axial end face side thereof in contact with or proximate to the floor surface 10A absorbs moisture of the floor surface 10A, which causes warpage after a corrugated product is produced. Since the vertical direction-of-roll information is added to the paper information, it is possible to find out whether or not either axial end face side is in the state of absorbing moisture of the floor surface 10A, and it is possible to prevent the occurrence of warpage by adjusting the water content when a corrugated product is produced in the corrugator.

Therefore, for example, when the paper roll 1 is carried in, the carry-in guide unit 53 guides the position or the posture of the paper roll 1 in the vertical direction during storage after the paper roll 1 is carried in, based on the vertical direction-of-roll information. Namely, when the one end face 1A side is in contact with or proximate to the floor surface 10A during the previous storage of the paper roll 1, the carry-in guide unit 53 performs guidance such that the orientation of the paper roll 1 during storage is reversed to cause the other end face B side to come into contact with or be proximate to the floor surface 10A, or the paper roll 1 is disposed to avoid the lowermost stage. Accordingly, it is possible to prevent the occurrence of warpage after a corrugated product is produced.

The carry-in guide unit 53 further acquires vertical direction-of-roll information over time to guide the position or the posture of the paper roll 1 in the vertical direction during storage based on the vertical direction-of-roll information. Namely, when the paper roll 1 is disposed in the lowermost stage and one axial end face 11A of the paper roll is disposed downward for a predetermined time or more to be in contact with or proximate to the floor surface 10A, guidance is performed such that the axial direction of the paper roll 1 is reversed or the paper roll 1 is disposed to avoid the lowermost stage. Accordingly, it is possible to prevent the occurrence of warpage after a corrugated product is produced.

When the paper roll 1 different from the paper roll 1 selected by the selection unit 54 is selected and taken out, the warning information transmitter 62 warns that an erroneous selection is made. In addition, when the paper roll 1 is carried in and placed at a position different from the specified carry-in position, the warning information transmitter 62 warns that an erroneous placement is performed. Here, when the carry-out is performed, in a case where the paper roll 1 other than the paper roll 1 selected by the selection unit 54 is moved by a predetermined range or more, for example, a radius of 3 to 10 m or more from the position where the paper roll 1 is placed, the warning information transmitter 62 transmits warning information to the display device 7 on a clamp lift 20 side. In addition, also when the carry-in is performed, in a case where the paper roll 1 is carried in, namely, placed at a position separated by a predetermined distance or more from the carry-in position selected by the carry-in guide unit 53, and the paper roll 1 stays at the location for a predetermined time or more, for example, for 10 to 30 seconds or more, the warning information transmitter 62 transmits warning information to the display device 7 on the clamp lift 20 side. The display device 7 displays a warning on the screen 8 based on the warning information transmitted by the warning information transmitter 62.

### [Method for managing paper roll]

Here, a method for managing a paper roll using the system for managing a paper roll described above will be described.

Firstly, the transmitter 3 transmits a radio wave toward the IC tag 2 of each of the plurality of paper rolls 1, and the receiver 4 receives response radio waves from the IC tags 2 for the transmitted radio waves (transmitting and receiving step).

Next, three-dimensional position information of the IC tag 2 which has emitted the response radio wave is calculated based on information regarding the received response radio wave (calculation step). In the present embodiment, the information regarding the response radio wave includes directivity information and intensity information of the response radio wave, and the three-dimensional position information of the IC tag 2 is calculated based on the directivity information and the intensity information of the response radio wave.

Then, the three-dimensional position information and the paper information of each of the plurality of paper rolls 1 from the calculated three-dimensional position information and the paper information which is input in advance and is specific to the paper roll 1 where the IC tag 1 is mounted are stored as linked information (storage step) .

### [Advantages]

Since the system for managing a paper roll and the method for managing a paper roll according to the present embodiment are configured as described above, it is possible to find out at which position each of a large number of the paper rolls 1 is disposed on a plane and in the perpendicular direction in the paper warehouse 10, namely, in which stage each of the paper rolls 1 is disposed in the vertical direction, in other words, it is possible to find out the three-dimensional positions of the paper rolls 1 and manage the paper rolls 1.

Since the found three-dimensional position information and the paper information of the paper roll 1 are stored as linked information, it is possible to properly and promptly perform the selection and the carry-out or the carry-in of the paper roll 1 without requiring a special technique.

In addition, since the transmitter 3, the receiver 4, and the tag position calculation unit 51 are operated at the predetermined cycle to update the linked information stored in the storage unit 6 at the predetermined cycle, it is possible to always find out the positions of a large number of the paper rolls 1; and thereby, for example, the selection and the carry-out or the carry-in of the paper roll 1 in the paper warehouse 10 can be always appropriately and promptly performed.

In addition, since the paper information of the paper roll 1 can be newly input or appropriately updated and input to the storage unit 6 through the input unit 9, the selection and the carry-out of the paper roll 1 in the paper warehouse 10 can be always properly performed.

Furthermore, since the carry-out guide unit 52 and the carry-in guide unit 53 guide the selection and the carry-out or the carry-in of the paper roll 1 using the display device 7, it is possible to properly and promptly perform the selection and the carry-out or the carry-in thereof without requiring a special technique.

In addition, since the IC tags 2 are disposed at two locations separated from each other in the axial direction of the winding core 11 of the paper roll 1, it is possible to find out the axial orientation of the paper roll 1, and the paper roll 1 is effectively protected from moisture.

In addition, since the selection unit 54 compares a to-be-ordered length to the paper length of each of the paper rolls 1 to select a paper roll suitable for a production order, the selection of the paper roll 1 can be properly performed.

Furthermore, when an erroneous selection is made, since a warning is issued, the use without the erroneous selection corrected can be eliminated.

In addition, when an erroneous placement is performed, since a warning is issued, the use without the erroneous placement corrected can be eliminated.

In addition, since the selection priority-setting unit 55 sets a selection consideration to be considered in association with the priority, the paper roll can be efficiently managed.

Furthermore, since the carry-in position priority-setting unit 56 sets a plurality of carry-in considerations to be considered in association with the priority, the paper roll can be efficiently managed.

### [Modification example]

The tag position calculation unit 51 of the present embodiment calculates the three-dimensional direction of the IC tag 2 with respect to the receiver 4 from the direction of a response radio wave received by the receiver 4 and obtains the distance from the receiver 4 to the IC tag 2 from the intensity of the response radio wave to obtain the three-dimensional position of the IC tag 2 with respect to the receiver 4, from the three-dimensional direction and the distance; however, the method for obtaining the three-dimensional position of the IC tag 2 based on information regarding the response radio wave is not limited thereto.

Here, another method for calculating the three-dimensional position of the IC tag 2 using the tag position calculation unit 51 will be described with reference to Fig. 6.

As illustrated in Fig. 6, a plurality (two in this example) of receivers 4A and 4B are provided at different positions. Then, the three-dimensional direction of the IC tag 2 with respect to the receivers 4A and 4B is calculated from the direction of a response radio wave from the IC tag 2, which is received by the receivers 4A and 4B. This direction can be illustrated by straight lines connecting the receivers 4A and 4B and the IC tag 2 in Fig. 6. Since an intersection of the straight lines is the three-dimensional position of the IC tag 2, the tag position calculation unit 51 can calculate the three-dimensional position of the IC tag 2 based on the directions of response radio waves from the IC tags 2, which are received by the plurality of receivers 4A and 4B, without using the intensities of the response radio waves.

### [Others]

The embodiment of the invention has been described above; however, the invention is not limited to the embodiment, and various modifications can be made without departing from the concept of the invention.

For example, guidance or warning related to the carry-out or the carry-in of the paper roll is performed by an image display using the display device; however, other means such as voice can be used together therewith or the image display can be changed to other means.

In addition, the tag position calculation unit 51 is indispensable among the units 51 to 62 of the control device 5, and the other components can be appropriately selected and adopted.

In addition, in the embodiment, the case where an operator who performs an operation related to the carry-out or the carry-in of the paper roll 1 is an operator getting in the clamp lift 20 and performs an operation while referring to the screen 8 of the display device 7 equipped in the clamp lift 20 has been described; however, the operator is not limited to an operator getting in the clamp lift 20, and the invention is not also limited to performing an operation while referring to the screen 8 of the display device 7 equipped in the clamp lift 20.

For example, it can be also assumed that an operator specifies the paper roll 1, which has to be carried out, while referring to a screen of a mobile computer such as a laptop computer or a tablet computer or specify a location where the paper roll 1 has to be carried to perform an operation related to the carry-out or the carry-in. In addition, it can be also assumed that an operator getting in the clamp lift 20 carries a mobile computer into the clamp lift 20 to perform an operation while referring to a screen of the mobile computer.

In such a case, in order to generate an image for guidance related to the carry-out or the carry-in of the paper roll 1 according to the field of sight of the operator, the image information generation unit 60 requires, for example, information regarding the position or the direction of the mobile computer as image position information which specifies the field of sight of the operator. Therefore, for example, when the image position information acquiring unit 59 acquires the information regarding the position and direction of the mobile computer to generate an image to be displayed based on the acquired information and to display the generated image on the screen of the mobile computer, it is possible to guide the carry-out or the carry-in of the paper roll 1 in an easy-to-understand manner.

### Reference Signs List

1: Paper roll
2: IC tag
3: Transmitter
4, 4A, 4B: Receiver
5: Control device
6: Storage unit
7: Display device
8: Screen of display device 7
9: Input unit
10: Paper warehouse as storage area
51: Tag position calculation unit
52: Carry-out guide unit
53: Carry-in guide unit
54: Selection unit
55: Selection priority-setting unit
56: Carry-in position priority-setting unit
57: Position specifying unit
58: Three-dimensional disposition calculation unit
59: Vehicle position information acquiring unit (image position information acquiring unit)
60: Image information generation unit
61: Vertical information adding unit
62: Warning information transmitter

## Claims

1. A system for managing a paper roll comprising:
an IC tag for long distance that is a non-contact passive type mounted on each of a plurality of paper rolls;
a transmitter that transmits a radio wave toward the IC tag of each of the plurality of paper rolls;
a receiver that receives a response radio wave from the IC tag for the transmitted radio wave;
a control device including a tag position calculation unit that calculates a three-dimensional position of the IC tag which has emitted the response radio wave, based on information regarding the response radio wave received by the receiver; and
a storage unit that stores three-dimensional position information and paper information of each of the plurality of paper rolls as linked information from information regarding the three-dimensional position of the IC tag calculated by the tag position calculation unit and the paper information that is input in advance and is specific to the paper roll on which the IC tag is mounted.

2. The system for managing a paper roll according to claim 1,
wherein the information regarding the response radio wave includes directivity information and intensity information of the response radio wave.

3. The system for managing a paper roll according to claim 1,
wherein a plurality of the receivers are provided at different positions, and information regarding the response radio wave received by each of the receivers includes directivity information of the response radio wave, and
the tag position calculation unit calculates the three-dimensional position based on the information regarding the response radio wave received by each of the plurality of receivers.

4. The system for managing a paper roll according to any one of claims 1 to 3,
wherein the control device operates the transmitter, the receiver, and the tag position calculation unit at a predetermined cycle to update the linked information stored in the storage unit at the predetermined cycle.

5. The system for managing a paper roll according to any one of claims 1 to 4,
wherein the control device includes an input unit that inputs the paper information of the paper roll, which is a new one or is in use, to the storage unit.

6. The system for managing a paper roll according to any one of claims 1 to 5,
wherein the control device includes a carry-out guide unit that guides a position of the paper roll based on the linked information stored in the storage unit.

7. The system for managing a paper roll according to any one of claims 1 to 6,
wherein the IC tag is disposed at a location that is biased from a center of a winding core of the paper roll in an axial direction toward any one side.

8. The system for managing a paper roll according to any one of claims 1 to 7,
wherein the IC tags are disposed at two locations that are separated from each other in an axial direction of a winding core of the paper roll.

9. The system for managing a paper roll according to any one of claims 1 to 8,
wherein the paper information includes information regarding a basis weight, a paper width, a manufacturer, a brand, and a paper length of the paper roll.

10. The system for managing a paper roll according to any one of claims 1 to 9,
wherein the control device includes a vertical information adding unit that determines whether or not the paper roll is disposed in a lowermost stage in contact with or proximate to a floor surface, from paper width information obtained from the paper information of the paper roll and information regarding a position of the IC tag of the paper roll in an axial direction and determines which axial end face of both axial end faces of the paper roll is disposed downward when the paper roll is disposed in the lowermost stage, to add determined vertical direction-of-roll information to the paper information, and a carry-in guide unit that guides a position or a posture of the paper roll in a vertical direction during storage of the paper roll based on the vertical direction-of-roll information when the paper roll is carried in.

11. The system for managing a paper roll according to claim 10,
wherein the carry-in guide unit acquires the vertical direction-of-roll information over time, and when the paper roll is disposed in the lowermost stage and one axial end face of the paper roll is disposed downward for a predetermined time or more, the carry-in guide unit guides that the axial direction of the paper roll is to be reversed.

12. The system for managing a paper roll according to claim 10 or 11,
wherein when the paper roll is carried in, the carry-in guide unit selects and guides a carry-in position based on the linked information.

13. The system for managing a paper roll according to claim 12,
wherein the control device includes a carry-in position priority-setting unit that sets priority for carry-in considerations in selecting the carry-in position.

14. The system for managing a paper roll according to claim 13,
wherein the carry-in considerations include at least one of a basis weight, a brand, and a paper length of the paper roll and a progress state of the paper roll.

15. The system for managing a paper roll according to claim 6 or any one of claims 7 to 14 which depends from claim 6,
wherein the control device includes a selection unit to which production order information for producing a product using the paper roll is input and which selects a paper roll optimal for a production order based on the production order information and the paper information of the linked information stored in the storage unit, and a position specifying unit that specifies a position of the paper roll based on the three-dimensional position information of the linked information of the selected paper roll.

16. The system for managing a paper roll according to claim 15,
wherein the control device includes a three-dimensional disposition calculation unit that calculates three-dimensional disposition information of all of the plurality of paper rolls and shape information of each of the paper rolls based on the linked information stored in the storage unit, an image position information acquiring unit that acquires image position information which specifies a field of sight of an operator involved in transport of the paper roll, and an image information generation unit that generates image information corresponding to the field of sight of the operator based on the information calculated by the three-dimensional disposition calculation unit and the information acquired by the image position information acquiring unit, and
the system further comprises a display device that displays an image based on the image information generated by the image information generation unit and identifies and displays the paper roll which is selected by the selection unit and has to be carried out.

17. The system for managing a paper roll according to claim 15 or 16,
wherein the production order information includes information regarding a to-be-ordered length, which is information regarding a paper length required for production, and
the selection unit compares the to-be-ordered length to the paper length of each of the paper rolls to select the paper roll suitable for the production order.

18. The system for managing a paper roll according to any one of claims 15 to 17,
wherein the control device includes a selection priority-setting unit that sets priority for selection considerations in selection by the selection unit.

19. The system for managing a paper roll according to claim 18,
wherein the selection considerations include at least one of using up the paper roll, securing a remaining length usable at the next time by leaving the paper roll unused, easily accessing to the paper roll, and preferentially using the paper roll which is old.

20. The system for managing a paper roll according to any one of claims 15 to 19,
wherein the control device includes a warning information transmitter which warns that an erroneous selection is made, when a paper roll different from the paper roll selected by the selection unit is selected and taken out.

21. The system for managing a paper roll according to claim 20,
wherein when the paper roll is placed at a carry-in position different from the carry-in position of the paper roll selected by the carry-in guide unit, the warning information transmitter warns that an erroneous placement is performed.

22. A method for managing a paper roll which manages a plurality of paper rolls on which IC tags for long distance that are non-contact passive type are mounted, the method comprising:
a transmitting and receiving step of transmitting a radio wave toward the IC tag of each of the plurality of paper rolls and receiving a response radio wave from the IC tag for the transmitted radio wave;
a calculation step of calculating three-dimensional position information of the IC tag which has emitted the response radio wave, based on information regarding the received response radio wave; and
a storage step of storing three-dimensional position information and paper information of each of the plurality of paper rolls as linked information from the calculated three-dimensional position information and the paper information which is input in advance and is specific to the paper roll on which the IC tag is mounted.
